# FASCICULE DE BREVET EUROPEEN

(11) **EP 3 620 442 B1**
(45) Date de publication et mention de la délivrance du brevet: **17.03.2021**
(21) Numéro de dépôt: 19199253.6
(22) Date de dépôt: 14.11.2014
(51) Int. Cl.: C03C 17/36

(54) **VITRAGE COMPRENANT UN SUBSTRAT REVETU D'UN EMPILEMENT COMPRENANT UNE COUCHE FONCTIONNELLE A BASE D'ARGENT ET UNE SOUS-COUCHE DE BLOCAGE EPAISSE DE TIOX**
VERGLASUNG MIT EINEM MIT EINER SCHICHTSTAPELUNG BESCHICHTETEN SUBSTRAT, DAS EINE FUNKTIONSSCHICHT AUF SILBERBASIS UND EINE DICKE TITANOXID-BLOCKIERUNTERSCHICHT UMFASST
GLAZING INCLUDING A SUBSTRATE COATED WITH A STACK COMPRISING A FUNCTIONAL LAYER MADE OF SILVER AND A THICK LOCKING TIOX SUB-LAYER

(30) Priorité: 15.11.2013 FR 1361189
(43) Date de publication de la demande: 11.03.2020
(62) Demande divisionnaire de: 14809932.8
(73) Titulaire: SAINT-GOBAIN GLASS FRANCE, 92400 Courbevoie (FR)
(72) Inventeur: BROSSARD, Sophie, 75010 PARIS (FR)
(74) Mandataire: Saint-Gobain Recherche

(56) Documents cités:
- EP-A1- 2 716 442
- EP-A2- 0 219 273
- WO-A1-2007/054656
- WO-A1-2009/115595
- WO-A1-2012/115850

## Description

L'invention concerne un vitrage comprenant un substrat transparent en verre revêtu d'un empilement de couches minces comprenant au moins une couche métallique fonctionnelle à base d'argent.

Les couches métalliques fonctionnelles à base d'argent (ou couches d'argent) ont des propriétés de conduction électrique et de réflexion des rayonnements infrarouges (IR) avantageuses, d'où leur utilisation dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Ces couches d'argent sont déposées entre des revêtements antireflets qui comprennent généralement plusieurs couches diélectriques permettant d'ajuster les propriétés optiques de l'empilement. Ces couches diélectriques permettent en outre de protéger la couche d'argent des agressions chimiques ou mécaniques.

Les propriétés optiques et électriques des vitrages dépendent directement de la qualité des couches d'argent telle que leur état cristallin, leur homogénéité ainsi que de leur environnement tel que la nature et la rugosité de surface des interfaces au-dessus et en-dessous de la couche d'argent.

Pour améliorer la qualité des couches métalliques fonctionnelles à base d'argent, il est connu d'utiliser des couches de blocage dont la fonction est de protéger ces couches d'une éventuelle dégradation liée au dépôt d'un revêtement antireflet ou liée à un traitement thermique. De nombreuses possibilités variant notamment par la nature, le nombre et la position desdites couches de blocage ont été proposées.

Par exemple, il est possible d'utiliser une couche de blocage ou un revêtement de blocage constitué de plusieurs couches de blocage. Ces couches ou revêtements de blocage peuvent être situés uniquement au-dessus, uniquement en-dessous ou à la fois au-dessus et en-dessous de la couche fonctionnelle.

Le choix de la nature et de l'épaisseur des couches de blocage est fonction des matériaux constituant la couche fonctionnelle, des matériaux constituant les revêtements antireflets situés au contact de la couche fonctionnelle, des éventuels traitements thermiques et des propriétés recherchées.

La complexité des empilements ainsi que la diversité des traitements et propriétés recherchées rendent nécessaire d'adapter les caractéristiques de la couche de blocage à chaque configuration

Le vitrage selon la demande de brevet EP 0 219 273 A2 comprend un substrat revêtu d'un empilement comprenant :
- un réseau à base de matériau conducteur,
- une couche d'oxyde de zinc,
- une couche de dioxyde de titane,
- une couche métallique,
- une couche sacrificielle de préférence en titane,
- une couche de dioxyde de titane,
- une couche d'oxyde de zinc,
- une couche supérieure comprenant une feuille plastique et une feuille de verre.

Parmi les couches de blocage traditionnellement utilisées, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (Ni/Cr).

Des couches de blocage à base d'un alliage de nickel et de chrome permettent de diminuer le flou et d'améliorer les propriétés mécaniques après traitement thermique de type trempe. Cependant, la présence de ces couches dégrade l'émissivité, l'absorption de l'empilement et la conductivité en favorisant notamment la diffusion des électrons. Ces couches atténuent également l'effet bénéfique lié à la présence d'une couche stabilisante destinée à favoriser la cristallisation de l'argent, telle qu'une couche d'oxyde de zinc, lorsque ces couches de blocages sont intercalées entre la couche stabilisante et la couche d'argent.

L'invention concerne tout particulièrement un vitrage devant subir un traitement thermique à température élevée tel qu'un recuit, un bombage et/ou une trempe. Or, les traitements thermiques à haute température peuvent provoquer des modifications au sein de la couche d'argent et notamment générer des défauts. Certains de ces défauts se présentent sous forme de trou ou de dôme.

Les défauts de type « trou » correspondent à l'apparition de zones dépourvues d'argent présentant une forme circulaire ou dendritique, c'est-à-dire à un démouillage partiel de la couche d'argent. La couche d'argent, après traitement thermique, est une couche d'argent comprenant des trous de forme circulaire ou dendritique correspondant aux zones sans argent. La couche d'argent observée au microscope apparait plane. L'épaisseur de cette couche prise au niveau des zones avec argent varie peu.

Les défauts de type « dôme » correspondent à la présence de « gros » grains d'argent générant des variations d'épaisseur au sein de la couche d'argent, c'est-à-dire des zones épaissies et des zones amincies. La variation d'épaisseur peut être ponctuelle, c'est-à-dire observée uniquement au niveau desdits « gros » grains. La couche d'argent peut alors avoir une épaisseur homogène sauf au niveau des « gros » grains. La variation d'épaisseur peut être plus étendue suite à un réarrangement de la couche d'argent autour desdits « gros » grains. Ces défauts de type « dôme » ne correspondent pas à un état intermédiaire de défaut de type « trou ».

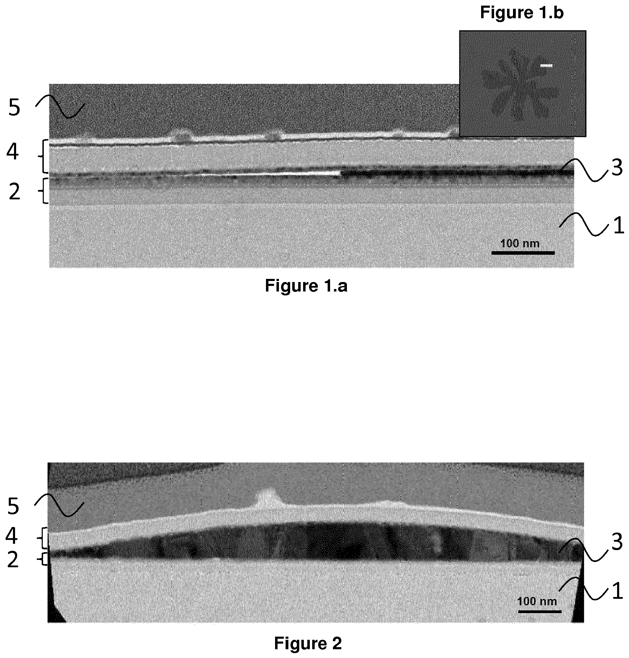

La figure 1.a est une image en coupe prise au microscope en transmission d'un défaut de type trou. La figure 1.b est une image prise au microscope électronique à balayage qui localise par le trait blanc la coupe de la figure 1.a.

La figure 2 est une image en coupe prise au microscope en transmission d'un défaut de type dôme.

Sur ces images, on distingue le substrat en verre 1, le revêtement antireflet 2 comprenant plusieurs couches diélectriques situé en-dessous de la couche d'argent, la couche d'argent 3, le revêtement antireflet 4 situé au-dessus de la couche d'argent et une couche protectrice 5.

Ces images montrent clairement la différence entre défauts de type trou et de type dôme.

La présence de défauts génère des phénomènes de diffusion de la lumière se traduisant visuellement par l'apparition d'un halo lumineux appelé « flou », visible généralement sous lumière intense. Le flou (« haze ») correspond à la quantité de la lumière transmise qui est diffusée à des angles de plus de 2,5 °.

La présence de ces défauts semble générer également une diminution de la conductivité, de la résistance mécanique et l'apparition de points de corrosion. Ces points de corrosion sont souvent visibles même en lumière normale.

Les raisons et mécanismes de la formation de ces défauts sont encore mal compris. L'occurrence des défauts de type trou ou dôme semble fortement tributaire de la nature des couches diélectriques constituant les revêtements antireflets situés au-dessus et en-dessous de la couche d'argent. La présence de certains matériaux diélectriques dans l'empilement, notamment certains oxydes, augmente la formation de certains défauts (trou ou dôme).

Le demandeur a découvert que la présence d'une couche diélectrique à base d'oxyde de titane (TiO₂), d'oxyde de niobium (Nb₂O₅) ou d'oxyde d'étain (SnO₂) dans des revêtements antireflets, favorise la formation de défaut de type trou lors d'un traitement thermique à température élevée. Or, ces matériaux sont des matériaux optiquement intéressants, notamment le dioxyde de titane de par son haut indice de réfraction. Il est connu, par exemple des demandes EP 678 484 et EP 2 406 197 qu'une ou plusieurs couches diélectriques à haut indice de réfraction, disposées entre le substrat et la couche fonctionnelle métallique peuvent permettre d'anti-refléter la couche fonctionnelle métallique. Une solution visant à ne pas utiliser ce type de matériau haut indice dans les revêtements antireflets n'est pas satisfaisante.

Le demandeur a découvert que la présence d'une couche diélectrique à base d'oxyde d'étain et de zinc (SnZnO) dans des revêtements antireflets, favorise la formation de défaut de type dôme.

Enfin, le demandeur a découvert que la présence d'une couche diélectrique à base de nitrure de silicium éventuellement dopé par de l'aluminium génère beaucoup moins de défauts de type trou ou de type dôme.

La demande WO 2007/054656 divulgue un vitrage comprenant un substrat transparent revêtu d'un empilement de couches minces comprenant une couche métallique fonctionnelle à base d'argent et une couche de blocage à base d'oxyde de titane. La couche de blocage présente une épaisseur de préférence comprise entre 0,5 et 2 nm. Les revêtements antireflets sont constitués de couches diélectriques à base de nitrure de silicium et d'oxyde de zinc. Ces couches diélectriques n'ont pas tendance à former des défauts de type trou ou dôme dans la couche fonctionnelle à base d'argent suite à un traitement thermique.

L'objectif de l'invention est de mettre au point un vitrage comprenant un substrat revêtu d'un empilement comprenant au moins une couche fonctionnelle à base d'argent et au moins un revêtement antireflet comprenant une couche diélectrique susceptible de générer des défauts de type trous dans la couche fonctionnelle à base d'argent. Le vitrage doit pouvoir subir des traitements thermiques à haute température de type bombage, trempe ou recuit en préservant sa qualité optique, sa tenue mécanique, sa résistance à la corrosion malgré la présence de la couche susceptible de générer des trous. Ces propriétés avantageuses doivent également être obtenues sans modifier les autres propriétés attendues pour des empilements comprenant une couche d'argent, par exemple sans modifier l'absorption, l'émissivité et la résistivité de manière significative.

L'invention a pour objet un vitrage comprenant un substrat transparent en verre revêtu d'un empilement de couches minces comprenant au moins une couche métallique fonctionnelle à base d'argent, au moins deux revêtements antireflets chaque revêtement antireflet comportant au moins une couche diélectrique, de manière à ce que chaque couche métallique fonctionnelle soit disposée entre deux revêtements antireflets caractérisé en ce que l'empilement comprend au moins un revêtement antireflet comprenant une couche diélectrique susceptible de générer des défauts de type trou et au moins une couche de blocage à base d'oxyde de titane présentant une épaisseur supérieure à 1 nm, de préférence supérieure à 2 nm, la couche de blocage est située entre le revêtement antireflet comprenant une couche diélectrique susceptible de générer des défauts de type trou et une couche métallique fonctionnelle à base d'argent et immédiatement au contact de la couche métallique fonctionnelle à base d'argent.

L'utilisation d'une couche de blocage, de préférence épaisse, à base d'oxyde de titane au contact de la couche métallique fonctionnelle à base d'argent permet d'empêcher significativement le démouillage et l'apparition de défauts de type trou dendritique dans la couche d'argent lorsque le substrat revêtu de l'empilement est soumis à un traitement thermique de type trempe.

La solution de l'invention convient tout particulièrement dans le cas de vitrage dont le revêtement antireflet comprenant une couche diélectrique susceptible de générer des défauts de type trou est situé en-dessous d'une couche métallique fonctionnelle à base d'argent.

L'invention permet également d'obtenir des performances supérieures, notamment une diminution du flou, de l'absorption dans le visible, de l'émissivité ainsi qu'une diminution de la révélation de rayures suite à un traitement thermique. Ces résultats avantageux sont observés notamment par comparaison à ceux obtenus avec des empilements comprenant une couche de blocage de nature différente, par exemple à base d'alliage NiCr ou avec des empilements ne comprenant pas de couche de blocage.

Sauf mention contraire, les épaisseurs évoquées dans le présent document sont des épaisseurs physiques. On entend par couche mince, une couche présentant une épaisseur comprise entre 0,1 nm et 100 micromètres.

Selon l'invention, un substrat transparent revêtu d'un empilement de couches minces signifie que l'empilement a été déposé sur le substrat par pulvérisation cathodique.

Selon l'invention, la couche métallique fonctionnelle à base d'argent est directement au contact d'une couche de blocage. Une sous-couche de blocage correspond à une couche de blocage disposée sous une couche fonctionnelle, position définie par rapport au substrat. Une couche de blocage disposée sur la couche fonctionnelle à l'opposé du substrat est appelée surcouche de blocage.

Les couches diélectriques susceptibles de générer des défauts de type trou peuvent être identifiées grâce à une analyse par microscopie optique ou par microscopie électronique à balayage. Pour cela, une couche diélectrique est déposée sur un substrat au contact ou à proximité d'une couche d'argent. On soumet l'ensemble à un traitement thermique. L'observation des images permettent d'identifier si des défauts sont générés. Le cas échéant, si ces défauts sont de type trou ou de type dôme.

Les couches diélectriques choisies parmi les couches à base d'oxyde de titane (TiO2), d'oxyde de niobium (Nb₂O₅) et d'oxyde d'étain (SnO₂) sont susceptibles de générer des défauts de type trou.

Une couche à base d'oxyde de titane (TiO₂) comprend au moins 95,0 %, de préférence au moins 96,5 % et mieux au moins 98,0 % en masse d'oxyde de titane.

Une couche à base d'oxyde de niobium (Nb₂O₅) comprend au moins 95,0 %, de préférence au moins 96,5 % et mieux au moins 98,0 % en masse d'oxyde de niobium.

Une couche à base d'oxyde d'étain (SnO₂) comprend au moins 95,0 %, de préférence au moins 96,5 % et mieux au moins 98,0 % en masse d'oxyde d'étain.

La couche diélectrique susceptible de générer des défauts de type trou n'est pas confondue avec la couche de blocage, c'est-à-dire que la couche diélectrique susceptible de générer des défauts de type trou et la couche de blocage sont deux couches distinctes. Lorsque la couche susceptible de générer des défauts de type trou est une couche de TiO₂, cette couche est séparée de la couche de blocage par au moins une couche de nature différente.

Les couches diélectriques susceptibles de générer des défauts de type trou présentent une épaisseur supérieure à 5 nm, de préférence comprise entre 8 et 20 nm.

La solution proposée selon l'invention convient lorsque la couche diélectrique susceptible de générer des trous est suffisamment proche de la couche fonctionnelle à base d'argent pour induire lesdits défauts. En effet, dans le cas d'empilement complexe comprenant des revêtements antireflets avec un certain nombre de couches diélectriques, lorsque la couche susceptible de générer des défauts de type trou est séparée de la couche fonctionnelle à base d'argent par une épaisseur importante d'une ou plusieurs couches non susceptibles de générer des défaut ou susceptibles de générer des défauts de type dôme, l'aptitude à générer des défauts de type trous est diminuée voire annulée.

La couche diélectrique susceptible de générer des défauts de type trou du revêtement antireflet est séparée de la couche fonctionnelle par une ou plusieurs couches, l'épaisseur de toutes les couches interposées entre la couche susceptible de générer des défauts de type trou et la couche fonctionnelle est d'au plus 20 nm, de préférence d'au plus 15 nm.

Selon un mode de réalisation avantageux, le revêtement antireflet situé en-dessous de la couche métallique fonctionnelle à base d'argent comporte au moins une couche diélectrique à fonction stabilisante immédiatement au contact de la couche de blocage. Cette couche diélectrique à fonction stabilisante peut être à base d'oxyde cristallisé, notamment à base d'oxyde de zinc, éventuellement dopé à l'aide d'au moins un autre élément, comme l'aluminium. La présence de cette couche stabilisante, notamment située en-dessous de la couche d'argent, contribue fortement aux bonnes performances en termes de conductivité et de résistance mécanique.

Contre toute attente, un effet synergique est observé sur l'abaissement des valeurs de flou obtenus après traitement thermique, lié à la présence conjointe, selon cette séquence, de la couche stabilisante et de la couche de blocage. La présence d'une couche stabilisante situé en-dessous de la couche d'argent est un facteur essentiel pour réduire le flou. Il n'est donc absolument pas prévisible qu'une couche épaisse de blocage déposée entre la couche stabilisante et la couche fonctionnelle conduise à une diminution du flou. Au contraire, on se serait attendu à ce que la présence d'une telle couche attenue, voire annule, l'action de la couche stabilisante.

La couche diélectrique susceptible de générer des défauts de type trou du revêtement antireflet est donc en général séparée de la couche fonctionnelle par au moins la couche de blocage et la couche stabilisante du revêtement antireflet.

La couche diélectrique susceptible de générer des défauts de type trou du revêtement antireflet est séparée de la couche fonctionnelle par une ou plusieurs couches, l'épaisseur de toutes les couches interposées entre la couche susceptible de générer des défauts de type trou et la couche fonctionnelle est d'au moins 6 nm, de préférence d'au moins 7,5 nm.

Un vitrage selon l'invention présente une absorption inférieure, avant et après un traitement thermique de type trempe, à celle d'un vitrage comprenant un substrat revêtu d'un empilement avec une sous-couche de blocage de type NiCr.

Après traitement thermique, les vitrages selon l'invention présente une diminution significative de leur émissivité. Les valeurs d'émissivité sont inférieures à celles d'un vitrage comprenant un substrat revêtu d'un empilement avec une sous-couche de blocage à base de NiCr. De manière plus surprenante, les valeurs d'émissivité sont également inférieures à celles d'un vitrage comprenant un substrat revêtu d'un empilement sans sous-couche de blocage.

Des essais ont montré que l'amélioration en termes de flou apportée par l'utilisation d'une couche de blocage augmente avec l'épaisseur de la couche de blocage. Ces essais ont consisté à évaluer le flou en fonction de l'épaisseur de la couche d'oxyde de titane après traitement thermique dans des conditions simulant celles d'une trempe. Les valeurs de flou diminuent lorsque l'épaisseur de la couche de blocage augmente. Toutefois, l'oxyde de titane est préférentiellement légèrement sous-oxydé et donc absorbant. Par conséquent, un compromis entre la diminution du flou et l'augmentation de l'absorption et de la résistivité en doit être trouvé, par exemple, en choisissant une épaisseur adaptée. La couche de blocage à base d'oxyde de titane présente une épaisseur supérieure à 2,5 nm, de préférence comprise entre 2,5 et 4,5 nm.

La couche de blocage peut être totalement oxydée sous forme TiO₂ ou partiellement sous-oxydée. Lorsqu'elle est partiellement sous-oxydée, elle n'est donc pas déposée sous forme stœchiométrique, mais sous forme sous-stoechiométrique, du type TiOₓ, où x est un nombre différent de la stœchiométrie de l'oxyde de titane TiO2, c'est-à-dire différent de 2 et de préférence inférieur à 2, en particulier compris entre 0,75 fois et 0,99 fois la stœchiométrie normale de l'oxyde. TiOx peut être en particulier tel que 1,5 < x < 1,98 ou 1,5 < x < 1,7, voire 1,7 < x < 1,95.

La couche de blocage est déposée à partir d'une cible céramique de TiOₓ avec x compris entre 1,5 et 2, de préférence dans une atmosphère non oxydante (c'est-à-dire sans introduction volontaire d'oxygène) constituée de préférence de gaz noble(s) (He, Ne, Xe, Ar, Kr). Cela permet d'éviter des problèmes de corrosion et de pollution de la couche d'argent.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Selon un mode de réalisation avantageux, l'empilement peut comprendre :
- un revêtement antireflet comprenant au moins deux couches diélectriques dont une couche diélectrique à base d'oxyde de titane et une couche diélectrique autre qu'une couche à base d'oxyde de titane séparant la couche diélectrique à base d'oxyde de titane d'une couche fonctionnelle métallique à base d'argent,
- une couche de blocage à base d'oxyde de titane présentant une épaisseur d'au moins 2 nm, de préférence d'au moins 2,5 nm,
- une couche métallique fonctionnelle à base d'argent située immédiatement au contact de la couche de blocage à base d'oxyde de titane.

Selon ce mode de réalisation, l'empilement peut comprendre :
- un revêtement antireflet situé en-dessous de la couche métallique fonctionnelle à base d'argent comprenant au moins une couche diélectrique à base d'oxyde de titane et une couche diélectrique à fonction stabilisante à base d'oxyde de zinc séparant la couche diélectrique à base d'oxyde de titane de la couche fonctionnelle métallique à base d'argent,
- une couche de blocage à base d'oxyde de titane présentant une épaisseur d'au moins 2 nm, située immédiatement au contact de la couche diélectrique à fonction stabilisante à base d'oxyde de zinc,
- une couche métallique fonctionnelle à base d'argent située immédiatement au contact de la couche de blocage à base d'oxyde de titane,
- éventuellement une surcouche de blocage,
- un revêtement antireflet situé au-dessus de la couche métallique fonctionnelle à base d'argent,
- éventuellement une couche de protection supérieure.

L'épaisseur des couches fonctionnelles à base d'argent est par ordre de préférence croissant comprise de 5 à 20 nm, de 8 à 15 nm.

La couche métallique fonctionnelle à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

Les couches diélectriques des revêtements antireflets peuvent être choisies parmi les oxydes ou nitrures d'un ou plusieurs éléments choisi(s) parmi le titane, le silicium, l'aluminium, l'étain et le zinc.

Les revêtements antireflets peuvent comprendre des couches diélectriques à fonction barrière et/ou des couches diélectriques à fonction stabilisante.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium choisis parmi les oxydes tels que SiO₂, les nitrures de silicium Si₃N₄ et les oxynitures SiOₓN_{y}, éventuellement dopé à l'aide d'au moins un autre élément, comme l'aluminium, à base de nitrures d'aluminium AIN ou à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La dernière couche de chaque revêtement antireflet situé en-dessous d'une couche fonctionnelle est une couche diélectrique à fonction stabilisante. En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température. Il est également avantageux d'avoir une couche fonction stabilisante, par exemple, à base d'oxyde de zinc au-dessus d'une couche fonctionnelle.

La ou les couches diélectriques à fonction stabilisante peuvent donc se trouver au-dessus et/ou en-dessous d'au moins une couche fonctionnelle ou de chaque couche fonctionnelle, soit directement à son contact ou soit séparées par une couche de blocage. De préférence, chaque couche fonctionnelle métallique est au-dessus d'un revêtement antireflet dont la couche supérieure est une couche diélectrique à fonction stabilisante, de préférence à base d'oxyde de zinc et/ou en-dessous d'un revêtement antireflet dont la couche inférieure est une couche diélectrique à fonction stabilisante, de préférence à base d'oxyde de zinc.

Cette couche diélectrique à fonction stabilisante peut avoir une épaisseur d'au moins 5 nm, notamment une épaisseur comprise entre 5 et 25 nm et mieux de 8 à 15 nm.

Un mode de réalisation particulièrement avantageux concerne un vitrage comprenant un substrat revêtu d'un empilement comprenant en partant du substrat transparent :
- un revêtement antireflet comprenant au moins une couche diélectrique à fonction barrière et au moins une couche diélectrique à fonction stabilisante,
- une couche de blocage,
- une couche fonctionnelle,
- un revêtement antireflet comprenant au moins une couche diélectrique à fonction stabilisante et une couche diélectrique à fonction barrière.

L'empilement peut comprendre une couche supérieure de protection déposée comme dernière couche de l'empilement notamment pour conférer des propriétés anti-rayures. Ces couches supérieures de protection ne sont pas considérées comme comprises dans un revêtement antireflet. Ces couches supérieures de protection sont séparées des couches fonctionnelles au moins par un revêtement antireflet dont l'épaisseur est en général supérieure à 20 nm. Ces couches sont en général ultra-minces et ont notamment une épaisseur comprise entre 2 et 5 nm.

Le substrat peut être en tout matériau susceptible de résister aux températures élevées du traitement thermique. Les substrats transparents selon l'invention sont en verre, notamment silico-sodo-calcique. L'épaisseur du substrat varie généralement entre 0,5 mm et 19 mm. L'épaisseur du substrat est de préférence inférieure ou égale à 6 mm, voire 4 mm.

Le vitrage comprenant le substrat revêtu de l'empilement peut avoir subi un traitement thermique à température élevée. Les traitements thermiques sont choisis parmi un recuit, par exemple par un recuit flash tel qu'un recuit laser ou flammage, une trempe et/ou un bombage. La température de traitement thermique est supérieure à 300 °C, de préférence supérieure à 400 °C, et mieux supérieure à 500 °C.

Le substrat revêtu de l'empilement peut être est un verre bombé et/ou trempé. Le vitrage peut être sous forme de vitrage monolithique, de vitrage feuilleté, de vitrage asymétrique ou d'un vitrage multiple notamment un double-vitrage ou un triple vitrage.

Le vitrage selon l'invention peut être un vitrage feuilleté. Dans ce cas, le substrat comprend au moins deux substrats rigides du type verre assemblés par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC. Dans une structure feuilletée, le substrat revêtu de l'empilement peut être au contact de la feuille de polymère.

L'invention concerne également un procédé de fabrication du substrat tel que défini ci-dessus. Selon ce procédé, on dépose l'empilement de couches minces sur le substrat par une technique sous vide du type pulvérisation cathodique éventuellement assistée par champ magnétique, et en ce que la couche de blocage est déposée à partir d'une cible céramique, dans une atmosphère non oxydante.

### Exemples

Des empilements de couches minces définis ci-après sont déposés sur des substrats en verre sodo-calcique clair d'une épaisseur de 2 ou 4 mm.

Pour ces exemples, les conditions de dépôt des couches déposées par pulvérisation (pulvérisation dite « cathodique magnétron ») sont résumées dans le tableau 1 ci-dessous.

Les couches d'oxyde de titane déposées en tant que couche diélectrique du revêtement antireflet ou en tant que couche de blocage peuvent être totalement ou partiellement oxydées. Pour cela on utilise une cible céramique de TiOx sous-stœchiométrique et on procède au dépôt soit en atmosphère oxydante pour obtenir une couche de TiO₂ totalement oxydée, soit en atmosphère inerte pour obtenir une couche sous-stœchiométrique.

Pour certains exemples, on fait varier les épaisseurs de couches en modifiant la puissance de dépôt.

| Tableau 1 | Cibles employées | Pression dépôt (mbar) | Gaz | Indice 550 nm |
|---|---|---|---|---|
| Si₃N₄ | Si:AI (92:8 % poids) | 1,5.10⁻³ | Ar 47 % - N₂ 53 % | 2,00 |
| ZnO | Zn:AI (98-2 % poids) | 1,5.10⁻³ | Ar 91 % - O₂ 9 % | 2,04 |
| NiCr | NiCr (80-20% at.) | 8.10⁻³ | Ar à 100 % | - |
| Ag | Ag | 8.10⁻³ | Ar à 100 % | - |
| TiOx | TiOx | 1,5.10⁻³ | Ar à 100 % | 2,5 à 3,5 |
| TiO₂ | TiOx | 1,5.10⁻³ | Ar 88 % - O₂ 12 % | 2,32 |
| SnZnO | SnZn | 1,5.10⁻³ | Ar 43 % - O₂ 57 % | 2,09 |

| | | | | |
|---|---|---|---|---|
| At. = atomique | | | | |

Les tableaux ci-dessous listent les matériaux et les épaisseurs physiques en nanomètres (sauf autres indications) de chaque couche ou revêtement qui constitue les empilements des exemples comparatifs et des exemples selon l'invention en fonction de leurs positions vis-à-vis du substrat porteur de l'empilement.

| **Vitrage** | **Couches** | **Cp.1** | **Cp.1'** | **Cp.2** | **Cp.3** | **Cp.3'** | **Cp.4** | **Cp.5** | **Cp.6** |
|---|---|---|---|---|---|---|---|---|---|
| Couche protectrice | TiO₂ | 2 | 2 | 2 | 2 | 2 | 2 | 2 | 2 |
| Revêtement antireflet | Si₃N₄ | 50 | 50 | 50 | 50 | 50 | 50 | 50 | 50 |
| AR2 | ZnO | 5 | 5 | 5 | 5 | 5 | 5 | 5 | 5 |
| Couche blocage OB | NiCr | 0,5 | 0,5 | 0,5 | 0,5 | 0,5 | 0,5 | 0,5 | 0,5 |
| Couche fonctionnelle | Ag | 11,5 | 11,5 | 10 | 11,5 | 11,5 | 11,5 | 11,5 | 11,5 |
| Couche blocage UB | NiCr | - | 0,5 | - | - | 0,5 | - | - | - |
| Revêtement antireflet | ZnO | 5 | 5 | 5 | 5 | 5 | 5 | 5 | 5 |
| AR1 | Si₃N₄ | - | - | - | - | - | - | 30 | 10 |
| | TiO₂ | - | - | - | 20 | 20 | 20 | 20 | 20 |
| | Si₃N₄ | 25 | 25 | - | 25 | 25 | - | - | 25 |
| | SnZnOₓ | - | - | 30 | - | - | - | - | - |
| Substrat (mm) | verre | 4 | 4 | 4 | 4 | 4 | 4 | 4 | 4 |
| Figure | - | 4 | 5 | 6 | 7 | 8 | - | - | - |

| **Vitrage** | **Couches** | **Ex.1** | **Ex.2** | **Ex.3** | **Ex.4** | **Ex.5** |
|---|---|---|---|---|---|---|
| Couche protectrice | TiO₂ | 2 | 2 | 2 | 2 | 2 |
| Revêtement antireflet AR2 | Si₃N₄ | 50 | 50 | 50 | 50 | 44 |
| | ZnO | 5 | 5 | 5 | 5 | 5 |
| Couche blocage OB | NiCr | 0,5 | 0,5 | 0,5 | 0,5 | 0,5 |
| Couche fonctionnelle | Ag | 11,5 | 11,5 | 11,5 | 11,5 | 11,5 |
| Couche blocage UB | TiOx | 1,5 | 3 | 6 | - | 3 |
| | TiO₂ | - | - | - | 2 | - |
| Revêtement antireflet AR1 | ZnO | 5 | 5 | 5 | 5 | 5 |
| | TiO₂ | 20 | 20 | 20 | 20 | 20 |
| | Si₃N₄ | 25 | 25 | 25 | 25 | 18 |
| | SnZnOₓ | - | - | - | - | - |
| Substrat (mm) | verre | 4 | 4 | 4 | 4 | 4 |

| **Vitrages** | **Couches** | **A** | **B** | **C** |
|---|---|---|---|---|
| Couche protectrice | TiO₂ | 2 | 2 | 2 |
| Revêtement antireflet AR2 | Si₃N₄ | 40 | 40 | 40 |
| | ZnO | 5 | 5 | 5 |
| Couche blocage OB1 | NiCr | 1 | 1 | 1 |
| Couche fonctionnelle | Ag | 10 | 10 | 10 |
| Couche blocage UB | TiOx | - | 4 | 4 |
| | TiO₂ | - | - | - |
| Revêtement antireflet AR1 | ZnO | 5 | - | 5 |
| | Si₃N₄ | - | - | - |
| | TiO₂ | 10 | 10 | 10 |
| | Si₃N₄ | 25 | 25 | 25 |
| Substrat (mm) | verre | 4 | 4 | 4 |

Les vitrages A, B et C ont été soumis à un traitement thermique dans un four Naber simulant une trempe avec un recuit à 620 °C pendant 10 minutes.

Les autres substrats revêtus des empilements ont été soumis à un traitement thermique dans un four de trempe.

### I. Observations microscopiques

La morphologie des couches est analysée par microscopie optique et par microscopie électronique à balayage. Ces essais mettent en évidence les différents défauts générés en fonction de la nature des couches diélectriques dans le revêtement antireflet sous la couche d'argent.

La présence de défauts après traitement thermique peut être quantifiée en mesurant la proportion de surface comprenant des défauts sur les vitrages traités thermiquement. La mesure consiste à déterminer le pourcentage de surface occupé par les trous.

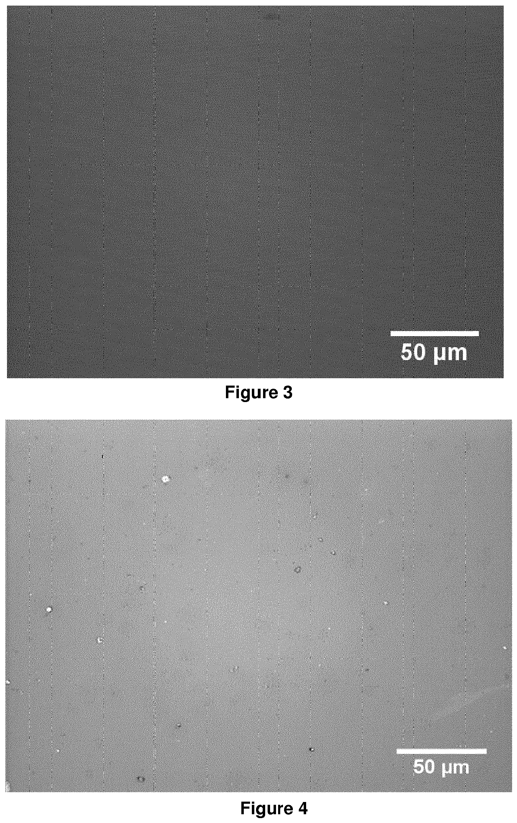

La figure 3 est une image pris au microscope optique d'un substrat revêtu d'un empilement comprenant une couche d'argent n'ayant pas subi de traitement thermique. Aucun défaut n'est observable. Toutes les autres images ont toutes été prises après traitement thermique. Le tableau ci-dessus récapitule les images prises au microscope optique des différents vitrages ainsi que l'aire occupée par lesdits défauts.

| **Figure** | **Vitrage** | **Aire des défauts de type trou** |
|---|---|---|
| Figure 4 | Cp1 | 0,04 % |
| Figure 5 | Cp1' | 0,02 % |
| Figure 6 | Cp2 | - |
| Figure 7 | Cp3 | 8,03 % |
| Figure 8 | Cp3' | 2,90 % |
| Figure 9 | Ex.2 | 1,57 % |

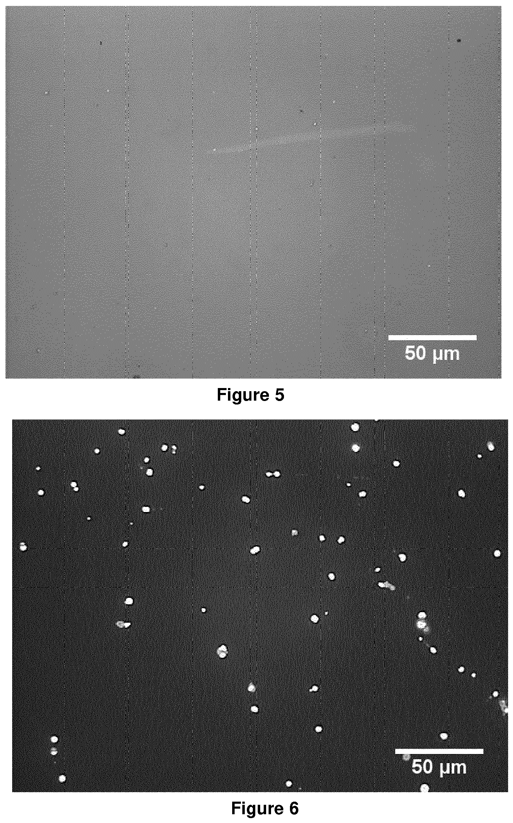

Les figures 4 et 5 illustrent deux vitrages ne comprenant pas de couches susceptibles de générer des défauts de type dôme ou de type trou selon l'invention sans sous bloqueur NiCr (figure 4) et avec sous bloqueur NiCr (figure 5). On constate sur ces images qu'il y a peu de défauts de type trou ou dôme après traitement thermique.

La figure 6 est une image d'un vitrage comprenant un empilement comprenant une couche susceptible de générer des défauts de type dôme. Le vitrage de la figure 6 diffère du vitrage de la figure 4 uniquement par la présence d'une couche d'oxyde de zinc et d'étain à la place de la couche de nitrure de silicium dans le revêtement antireflet situé en-dessous de la couche fonctionnelle à base d'argent. L'image de la figure 6 ne comprend pas tâche de forme dendritique caractéristique des défauts de type trou.

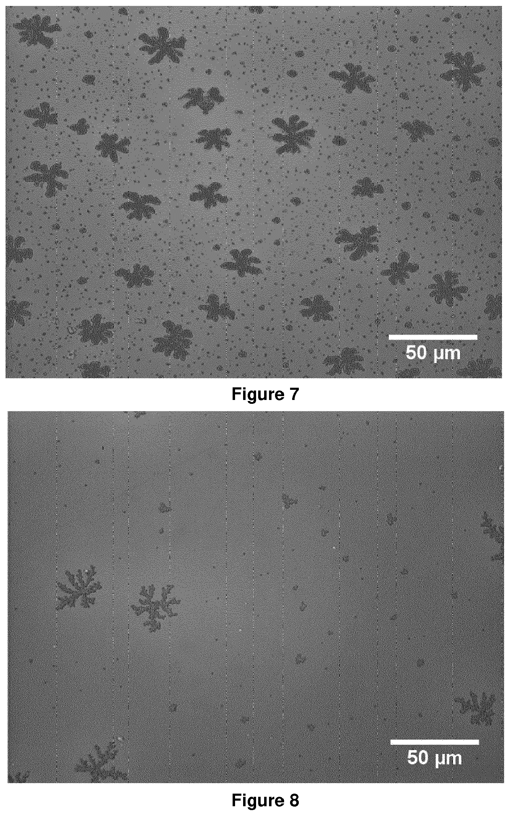

Les figures 7 et 8 sont des images de vitrage comprenant un empilement comprenant une couche susceptible de générer des défauts de type trou sans sous bloqueur (figure 7) et avec sous bloqueur NiCr (figure 8). Les tâches noires de forme dendritique correspondent aux zones sans argent, c'est-à-dire aux défauts de type trou obtenus après trempe.

Les vitrages Cp.3 et Cp.3' illustrés par les figures 7 et 8 diffèrent des vitrages Cp1. et Cp1' par la présence d'une couche d'oxyde de titane de 10 nm entre la couche à fonction stabilisante d'oxyde de zinc et la couche barrière de nitrure de silicium dans le revêtement antireflet situé en-dessous de la couche fonctionnelle à base d'argent. Le vitrage comparatif Cp.3 ne comprend pas de sous-couche de blocage et le vitrage comparatif Cp.3' comprend une sous-couche de blocage à base de NiCr. Ces exemples comparatifs montrent clairement que la nature des couches diélectriques du revêtement antireflet influe sur la présence et le type de défauts générés dans les couches d'argent.

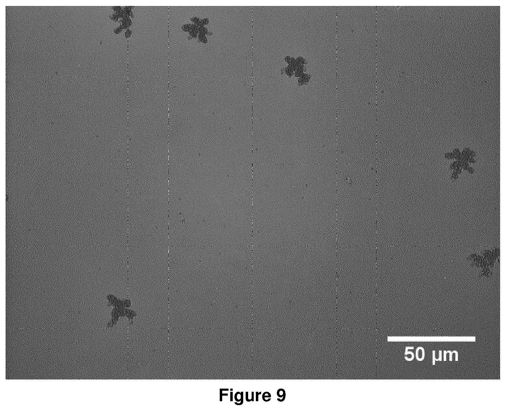

La figure 9 est une image d'un vitrage selon l'invention comprenant un empilement comprenant une couche susceptible de générer des défauts de type trou avec un sous bloqueur TiOx. La solution de l'invention ne fait pas totalement disparaitre les défauts de type trou générés suite à un traitement thermique lorsque l'empilement comprend une couche susceptible de générer des défauts de type trou. Toutefois, leur diminution est significative avec notamment une proportion de surface comprenant des défauts inférieure à 2 %.

### II. Réflexion diffuse et appréciation de la diminution du nombre de défaut

Le flou a été évalué par mesure de la réflexion diffuse visible moyenne au spectromètre Perkin-Elmer L900. La mesure consiste à faire la moyenne de la partie diffusée de la réflexion sur le domaine du visible, en excluant la réflexion spéculaire de la mesure et en soustrayant la ligne de base prise sur un échantillon de référence non flou. Il s'exprime en pourcentage par rapport à une réflexion totale mesurée sur un miroir de référence. Le tableau ci-dessous reprend les résultats obtenus.

Une corrélation existe entre le pourcentage de surface occupé par les trous et le niveau de flou.

Afin de pouvoir apprécier la diminution du nombre de défaut, le Δ défaut/réf (cp.3) correspondant à la variation du nombre de défaut par rapport au vitrage comparatif comprenant un empilement sans sous-couche de blocage (cp.3) pris comme référence a été calculé. Le Δ défaut/cp.3' correspondant à la variation du nombre de défaut par rapport au vitrage comparatif comprenant un empilement avec une sous-couche de blocage NiCr (cp.3') a également été calculé.

Le tableau ci-dessous récapitule ces valeurs ainsi que les valeurs de réflexion diffuse et l'aire en pourcentage de défaut.

| **Vitrage** | **Aire des défauts** | **Réflexion diffuse** | **Δ défaut / Réf (cp3)** | **Δ défaut / Cp.3'** |
|---|---|---|---|---|
| Cp.1 | 0,04 % | 0,04% | - | - |
| Cp.1' | 0,02 % | 0,06% | - | - |
| Cp. 3 | 8,03 % | 2,21% | - | - |
| Cp. 3' | 2,90 % | 0,26% | - 65 % | - |
| Cp. 4 | ≈ 4,3 % | 1,66% | - | - |
| Cp. 5 | ≈ 0,3 % | 0,11% | - | - |
| Cp. 6 | ≈ 0,2 % | 0,03% | - | - |
| Ex. 1 | ≈ 1,8% | 0,68% | - 77% | - 38 % |
| Ex. 2 | 1,57 % | 0,43% | - 81 % | - 46 % |
| Ex. 3 | ≈ 0,8 % | 0,17% | - 89% | - 72 % |
| Ex. 4 | ≈ 1,8 % | 0,36% | - 77% | - 38 % |
| Ex. 5 | ≈ 1,2 % | 0,35% | - 85 % | - 59 % |

Ces exemples confirment que des vitrages comprenant des empilements sans revêtement antireflet comprenant des couches susceptibles de générer des trous comprennent peu de défaut suite au traitement thermique et un flou faible (Cp.1 et Cp.1').

Les vitrages selon l'invention comprenant une sous-couche de blocage à base d'oxyde de titane comprennent moins de défauts après traitement thermique et un flou plus faible. Plus l'épaisseur de la sous-couche de blocage est importante plus ces propriétés, absence de défauts et diminution du flou, sont améliorées. Ces résultats illustrent l'amélioration significative en termes de diminution flou apportée par la solution de l'invention.

Ces comparaisons mettent également en évidence qu'une sous-couche de blocage épaisse d'oxyde de titane permet de diminuer le nombre défaut de type trou suite à un traitement thermique plus efficacement qu'une sous-couche à base d'un alliage NiCr lorsque l'empilement comprend un revêtement antireflet comprenant une couche susceptible de générer des trous.

Les vitrages comparatifs Cp.4, Cp.5 et Cp.6 comprennent des empilements complexes comprenant des revêtements antireflets variant notamment par la position au sein du revêtement antireflet de la couche susceptible de générer des défauts de type trou. On constate que l'aptitude à générer des défauts de type trous est diminuée voire annulée lorsque la couche susceptible de générer des trous est suffisamment éloignée de la couche d'argent par une épaisseur importante d'une ou plusieurs couches moins susceptibles de générer des défauts telles que des couches de Si₃N₄ (Cp.5 et Cp.6).

La solution proposée selon l'invention convient plus particulièrement lorsque la couche diélectrique susceptible de générer des trous est suffisamment proche de la couche fonctionnelle à base d'argent pour induire lesdits défauts.

### III. Propriétés optiques

Les caractéristiques optiques ont été mesurées pour des doubles vitrages de structure : verre de 6 mm / espace intercalaire de 16 mm rempli d'argon 90% / verre de 4 mm, l'empilement étant positionné en face 2 (la face 1 du vitrage étant la face la plus à l'extérieur du vitrage, comme habituellement).

Les valeurs d'émissivité en pourcentage (ε) calculées selon la norme EN 12898 ainsi que les valeurs d'absorption (Abs) et de facteur solaire (g) mesurées selon la norme EN 410, avant et après trempe sont regroupées dans le tableau ci-dessous.

| | Avant trempe | | | Après trempe | | |
|---|---|---|---|---|---|---|
| | ε | Abs | g | ε | Abs | g |
| Cp. 3 | 5,6 % | 7,6 % | 63,5 % | 5,1 % | 6,8 % | 60,2 % |
| Cp. 3' | 6,7 % | 9,3 % | 63,1 % | 5,1 % | 7,5 % | 62,0 % |
| Cp. 5 | 5,5 % | 9,2 % | 60,9 % | 4,5 % | 6,5 % | 60,8 % |
| Cp. 6 | 5,8 % | 8,5 % | 62,4 % | 4,9 % | 8,1 % | 61,3 % |
| Ex.1 | 6,1 % | 8,0 % | 63,3 % | 4,6 % | 6,7 % | 62,2 % |
| Ex.2 | 6,5 % | 8,4 % | 63,4 % | 4,6 % | 6,6 % | 62,4 % |
| Ex.3 | 6,6 % | 8,8 % | 63,3 % | 4,6 % | 6,8 % | 62,6 % |
| Ex.4 | 6,2 % | 8,5 % | 63,6 % | 4,5 % | 6,7 % | 62,5 % |
| Ex.5 | 6,2 % | 8,8 % | 64,5 % | 4,1 % | 6,9 % | 63,2 % |

L'ajout d'une sous-couche de blocage provoque une augmentation de l'émissivité avant trempe car cette couche, peu importe sa nature, perturbe la croissance épitaxiale de l'argent.

La présence de la sous-couche de blocage épaisse selon l'invention induit une augmentation de l'émissivité avant trempe par rapport à un empilement ne comprenant pas de sous-couche de blocage, mais cette augmentation est plus faible que celle obtenue avec d'autres sous-couches de blocage.

Après traitement thermique, le vitrage selon l'invention présente une émissivité significativement plus faible qu'un vitrage sans sous-couche de blocage et qu'un vitrage comprenant une sous-couche de blocage à base de NiCr. L'obtention d'une faible émissivité rend compte d'une réduction des pertes d'énergie par rayonnement et donc d'une amélioration de la performance thermique du double vitrage.

En effet, le vitrage Cp3' comprenant une couche susceptible de générer des défauts de type trou et un sous bloqueur NiCr présente des valeurs de flou correctes mais ne présente pas les propriétés avantageuses de l'invention en termes d'émissivité, d'absorption et de facteur solaire.

La solution de l'invention permet donc une diminution du flou significative tout en diminuant également l'émissivité et en augmentant le facteur solaire.

### IV. Evaluation de la synergie entre la couche stabilisante et la couche de blocage

Le flou a été évalué par mesure de la réflexion diffuse visible moyenne au spectromètre Perkin-Elmer L900.

| **Vitrage** | **Flou** | **ΔFIou/Ref** |
|---|---|---|
| A | 0,20 % | - |
| B | 0,30 % | + 50% |
| C | 0,02 % | - 90% |

Le ΔFIou/ref correspond à la variation de flou par rapport au vitrage A comparatif ne comprenant pas de sous-couche de blocage.

Ces essais mettent en évidence que la présence de la couche stabilisante est essentielle pour obtenir des valeurs de flou basse. Cependant, contre toute attente, on observe un effet synergique sur les abaissements des valeurs de flou lié à la présence conjointe, selon cette séquence, de la couche stabilisante et de la sous-couche de blocage. En effet, il n'est absolument pas prévisible qu'une couche épaisse de sous-blocage déposée entre la couche stabilisante et la couche fonctionnelle conduise à une diminution du flou et a fortiori à un abaissement de 90 % par rapport à un vitrage ne comprenant pas de couche de blocage. Au contraire, on se serait attendu à ce que la présence d'une telle couche empêche l'action de la couche stabilisante.

Ces résultats mettent en évidence que la présence d'une sous-couche de blocage épaisse au-dessus d'une couche stabilisante permet une diminution du flou significative après traitement thermique de type trempe.

## Revendications

1. Vitrage comprenant un substrat transparent en verre revêtu d'un empilement de couches minces comprenant au moins une couche métallique fonctionnelle à base d'argent, au moins deux revêtements antireflets, chaque revêtement antireflet comportant au moins une couche diélectrique, de manière à ce que chaque couche métallique fonctionnelle soit disposée entre deux revêtements antireflets **caractérisé en ce que** l'empilement comprend :
- au moins un revêtement antireflet comprenant une couche diélectrique susceptible de générer des défauts de type trou choisie parmi les couches à base d'oxyde de titane, d'oxyde de niobium et d'oxyde d'étain, le revêtement antireflet est situé en-dessous d'une couche métallique fonctionnelle à base d'argent, et
- au moins une couche de blocage à base d'oxyde de titane présentant une épaisseur supérieure à 1 nm, la couche de blocage est située entre le revêtement antireflet comprenant une couche diélectrique susceptible de générer des défauts de type trou et une couche métallique fonctionnelle à base d'argent, immédiatement au contact de la couche métallique fonctionnelle à base d'argent,
le revêtement antireflet situé en-dessous de la couche métallique fonctionnelle à base d'argent comporte au moins une couche diélectrique à base d'oxyde de zinc, à fonction stabilisante immédiatement en contact avec la couche de blocage.

2. Vitrage selon la revendication 1 **caractérisé en ce que** les couches diélectriques susceptibles de générer des défauts de type trou présentent une épaisseur supérieure à 5 nm, de préférence comprise entre 8 et 20 nm.

3. Vitrage selon l'une quelconque des revendications précédentes, **caractérisé en ce que** la couche diélectrique susceptible de générer des défauts de type trou du revêtement antireflet est séparée de la couche fonctionnelle par une ou plusieurs couches, l'épaisseur de toutes les couches interposées entre la couche susceptible de générer des défauts de type trou et la couche fonctionnelle est d'au plus 20 nm, de préférence d'au plus 15 nm.

4. Vitrage selon l'une quelconque des revendications précédentes, **caractérisé en ce que** la couche diélectrique susceptible de générer des défauts de type trou du revêtement antireflet est séparée de la couche fonctionnelle par une ou plusieurs couches, l'épaisseur de toutes les couches interposées entre la couche susceptible de générer des défauts de type trou et la couche fonctionnelle est d'au moins 6 nm, de préférence d'au moins 7,5 nm.

5. Vitrage selon l'une quelconque des revendications précédentes, **caractérisé en ce que** la couche de blocage à base d'oxyde de titane présente une épaisseur comprise entre 2,5 et 4,5 nm.

6. Vitrage selon l'une quelconque des revendications précédentes, **caractérisé en ce que** la couche de blocage à base d'oxyde de titane est déposée à partir d'une cible céramique de TiOx avec x compris entre 1,5 et 2, dans une atmosphère non oxydante.

7. Vitrage selon l'une quelconque des revendications précédentes, **caractérisé en ce que** le revêtement antireflet situé en-dessous de la couche métallique fonctionnelle à base d'argent comporte au moins une couche diélectrique à fonction stabilisante immédiatement en contact avec la couche de blocage, notamment à base d'oxyde de zinc, dopé à l'aide d'au moins un autre élément, comme l'aluminium.

8. Vitrage selon l'une quelconque des revendications précédentes, **caractérisé en ce que** l'empilement comprend :
- un revêtement antireflet comprenant au moins deux couches diélectriques dont une couche diélectrique à base d'oxyde de titane et une couche diélectrique autre qu'une couche à base d'oxyde de titane séparant la couche diélectrique à base d'oxyde de titane d'une couche fonctionnelle métallique à base d'argent,
- une couche de blocage à base d'oxyde de titane présentant une épaisseur d'au moins 2 nm, de préférence d'au moins 2,5 nm,
- une couche métallique fonctionnelle à base d'argent située immédiatement au contact de la couche de blocage à base d'oxyde de titane.

9. Vitrage selon l'une quelconque des revendications précédentes, **caractérisé en ce que** l'empilement comprend :
- un revêtement antireflet situé en-dessous de la couche métallique fonctionnelle à base d'argent comprenant au moins une couche diélectrique à base d'oxyde de titane et une couche diélectrique à fonction stabilisante à base d'oxyde de zinc séparant la couche diélectrique à base d'oxyde de titane de la couche fonctionnelle métallique à base d'argent,
- une couche de blocage à base d'oxyde de titane présentant une épaisseur d'au moins 2 nm, située immédiatement en contact de la couche diélectrique à fonction stabilisante à base d'oxyde de zinc,
- une couche métallique fonctionnelle à base d'argent située immédiatement au contact de la couche de blocage à base d'oxyde de titane,
- éventuellement une surcouche de blocage,
- un revêtement antireflet situé au-dessus de la couche métallique fonctionnelle à base d'argent,
- éventuellement une couche de protection supérieure.

10. Vitrage selon l'une des revendications précédentes **caractérisé en ce que** l'épaisseur d'une couche métallique fonctionnelle est comprise entre 5 et 20 nm.

11. Vitrage selon l'une quelconque des revendications précédentes, **caractérisé en ce que** les revêtements antireflets comportent au moins une couche diélectrique à fonction barrière à base de composés de silicium choisis parmi les oxydes tels que SiO₂, les nitrures de silicium Si₃N₄ et les oxynitures SiOₓN_{y}, éventuellement dopé à l'aide d'au moins un autre élément, comme l'aluminium.

12. Vitrage selon l'une quelconque des revendications précédentes **caractérisé en ce que** le substrat revêtu de l'empilement a subi un traitement thermique à une température supérieure à 300 °C, de préférence 500 °C.

13. Vitrage selon l'une quelconque des revendications précédentes, **caractérisé en ce qu'**au moins le substrat revêtu de l'empilement est en verre bombé et/ou trempé.

14. Vitrage selon l'une quelconque des revendications précédentes, **caractérisé en ce que** l'empilement de couches minces est déposé sur le substrat par une technique sous vide du type pulvérisation cathodique éventuellement assistée par champ magnétique.

## Patentansprüche

1. Verglasung, umfassend ein transparentes Glassubstrat, das mit einer Stapelung dünner Schichten beschichtet ist, die mindestens eine metallische Funktionsschicht auf Basis von Silber und mindestens zwei Antireflexbeschichtungen umfasst, wobei jede Antireflexbeschichtung mindestens eine dielektrische Schicht enthält, sodass jede metallische Funktionsschicht zwischen zwei Antireflexbeschichtungen angeordnet ist, **dadurch gekennzeichnet, dass** die Stapelung Folgendes umfasst:
- mindestens eine Antireflexbeschichtung, die eine dielektrische Schicht umfasst, die lochartige Defekte erzeugen kann, ausgewählt aus Schichten auf Basis von Titanoxid, Nioboxid und Zinnoxid, wobei sich die Antireflexbeschichtung unterhalb einer metallischen Funktionsschicht auf Basis von Silber befindet, und
- mindestens eine Blockierschicht auf Basis von Titanoxid mit einer Dicke von mehr als 1 nm, wobei sich die Blockierschicht zwischen der Antireflexbeschichtung, die eine dielektrische Schicht umfasst, die lochartige Defekte erzeugen kann, und einer metallischen Funktionsschicht auf Basis von Silber, unmittelbar in Kontakt mit der metallischen Funktionsschicht auf Basis von Silber, befindet,
wobei die Antireflexbeschichtung, die sich unterhalb der metallischen Funktionsschicht auf Basis von Silber befindet, mindestens eine dielektrische Schicht auf Basis von Zinkoxid mit stabilisierender Funktion in unmittelbarem Kontakt mit der Blockierschicht enthält.

2. Verglasung nach Anspruch 1, **dadurch gekennzeichnet, dass** die dielektrischen Schichten, die lochartige Defekte erzeugen können, eine Dicke von mehr als 5 nm, vorzugsweise im Bereich zwischen 8 und 20 nm, aufweisen.

3. Verglasung nach einem der vorstehenden Ansprüche, **dadurch gekennzeichnet, dass** die dielektrische Schicht der Antireflexbeschichtung, die lochartige Defekte erzeugen kann, durch eine oder mehrere Schichten von der Funktionsschicht getrennt ist, wobei die Dicke aller Schichten, die zwischen der Schicht, die lochartige Defekte erzeugen kann, und der Funktionsschicht eingefügt sind, höchstens 20 nm, vorzugsweise höchstens 15 nm, beträgt.

4. Verglasung nach einem der vorstehenden Ansprüche, **dadurch gekennzeichnet, dass** die dielektrische Schicht der Antireflexbeschichtung, die lochartige Defekte erzeugen kann, durch eine oder mehrere Schichten von der Funktionsschicht getrennt ist, wobei die Dicke aller Schichten, die zwischen der Schicht, die lochartige Defekte erzeugen kann, und der Funktionsschicht eingefügt sind, mindestens 6 nm, vorzugsweise mindestens 7,5 nm, beträgt.

5. Verglasung nach einem der vorstehenden Ansprüche, **dadurch gekennzeichnet, dass** die Blockierschicht auf Basis von Titanoxid eine Dicke im Bereich zwischen 2,5 und 4,5 nm aufweist.

6. Verglasung nach einem der vorstehenden Ansprüche, **dadurch gekennzeichnet, dass** die Blockierschicht auf Basis von Titanoxid ausgehend von einem keramischen TiOx-Target, mit x im Bereich zwischen 1,5 und 2, in nicht oxidierender Atmosphäre abgeschieden wird.

7. Verglasung nach einem der vorstehenden Ansprüche, **dadurch gekennzeichnet, dass** die Antireflexbeschichtung, die sich unterhalb der metallischen Funktionsschicht auf Basis von Silber befindet, mindestens eine dielektrische Schicht mit stabilisierender Funktion in unmittelbarem Kontakt mit der Blockierschicht, insbesondere auf Basis von Zinkoxid, dotiert mithilfe mindestens eines anderen Elements, wie Aluminium, enthält.

8. Verglasung nach einem der vorstehenden Ansprüche, **dadurch gekennzeichnet, dass** die Stapelung Folgendes umfasst:
- eine Antireflexbeschichtung, die mindestens zwei dielektrische Schichten umfasst, davon eine dielektrische Schicht auf Basis von Titanoxid und eine dielektrische Schicht, die von einer Schicht auf Basis von Titanoxid verschieden ist, welche die dielektrische Schicht auf Basis von Titanoxid von einer metallischen Funktionsschicht auf Basis von Silber trennt,
- eine Blockierschicht auf Basis von Titanoxid mit einer Dicke von mindestens 2 nm, vorzugsweise mindestens 2,5 nm,
- eine metallische Funktionsschicht auf Basis von Silber, die sich unmittelbar in Kontakt mit der Blockierschicht auf Basis von Titanoxid befindet.

9. Verglasung nach einem der vorstehenden Ansprüche, **dadurch gekennzeichnet, dass** die Stapelung Folgendes umfasst:
- eine Antireflexbeschichtung, die sich unterhalb der metallischen Funktionsschicht auf Basis von Silber befindet, umfassend mindestens eine dielektrische Schicht auf Basis von Titanoxid und eine dielektrische Schicht mit stabilisierender Funktion auf Basis von Zinkoxid, welche die dielektrische Schicht auf Basis von Titanoxid von der metallischen Funktionsschicht auf Basis von Silber trennt,
- eine Blockierschicht auf Basis von Titanoxid mit einer Dicke von mindestens 2 nm, die sich in unmittelbarem Kontakt mit der dielektrischen Schicht mit stabilisierender Funktion auf Basis von Zinkoxid befindet,
- eine metallische Funktionsschicht auf Basis von Silber, die sich unmittelbar in Kontakt mit der Blockierschicht auf Basis von Titanoxid befindet,
- gegebenenfalls eine blockierende Deckschicht,
- eine Antireflexbeschichtung, die sich über der metallischen Funktionsschicht auf Basis von Silber befindet,
- gegebenenfalls eine obere Schutzschicht.

10. Verglasung nach einem der vorstehenden Ansprüche, **dadurch gekennzeichnet, dass** die Dicke einer metallischen Funktionsschicht im Bereich zwischen 5 und 20 nm liegt.

11. Verglasung nach einem der vorstehenden Ansprüche, **dadurch gekennzeichnet, dass** die Antireflexbeschichtungen mindestens eine dielektrische Schicht mit Barrierefunktion auf Basis von Siliciumverbindungen, ausgewählt aus Oxiden wie SiO₂, Siliciumnitriden S₃N₄ und Oxynitriden SiOₓN_{y}, gegebenenfalls dotiert mithilfe mindestens eines anderen Elements, wie Aluminium, enthalten.

12. Verglasung nach einem der vorstehenden Ansprüche, **dadurch gekennzeichnet, dass** das mit einer Stapelung beschichtete Substrat einer Wärmebehandlung bei einer Temperatur über 300 °C, vorzugsweise 500 °C, unterzogen wurde.

13. Verglasung nach einem der vorstehenden Ansprüche, **dadurch gekennzeichnet, dass** mindestens das mit der Stapelung beschichtete Substrat aus gebogenem und/oder gehärtetem Glas besteht.

14. Verglasung nach einem der vorstehenden Ansprüche, **dadurch gekennzeichnet, dass** die Stapelung dünner Schichten auf dem Substrat durch eine Vakuumtechnik vom Typ Kathodenzerstäubung, gegebenenfalls durch ein Magnetfeld unterstützt, abgeschieden wird.

## Claims

1. A glazing comprising a transparent glass substrate coated with a stack of thin layers comprising at least one silver-based functional metal layer and at least two antireflective coatings, each antireflective coating comprising at least one dielectric layer, so that each functional metal layer is positioned between two antireflective coatings, **characterized in that** the stack comprises:
- at least one antireflective coating comprising a dielectric layer capable of generating defects of hole type chosen from layers based on titanium oxide, on niobium oxide and on tin oxide, the antireflective coating being located below a silver-based functional metal layer, and
- at least one blocking layer based on titanium oxide exhibiting a thickness of greater than 1 nm, the blocking layer being located between the antireflective coating comprising a dielectric layer capable of generating defects of hole type and a silver-based functional metal layer, immediately in contact with the silver-based functional metal layer,
- the antireflective coating located below the silver-based functional metal layer comprises at least one dielectric layer based on zinc oxide having a stabilizing function immediately in contact with the blocking layer.

2. The glazing as claimed in claim 1, **characterized in that** the dielectric layers capable of generating defects of hole type exhibit a thickness of greater than 5 nm, preferably of between 8 and 20 nm.

3. The glazing as claimed in either one of the preceding claims, **characterized in that** the dielectric layer capable of generating defects of hole type of the antireflective coating is separated from the functional layer by one or more layers, the thickness of all the layers interposed between the layer capable of generating defects of hole type and the functional layer being at most 20 nm, preferably at most 15 nm.

4. The glazing as claimed in any one of the preceding claims, **characterized in that** the dielectric layer capable of generating defects of hole type of the antireflective coating is separated from the functional layer by one or more layers, the thickness of all the layers interposed between the layer capable of generating defects of hole type and the functional layer being at least 6 nm, preferably at least 7.5 nm.

5. The glazing as claimed in any one of the preceding claims, **characterized in that** the blocking layer based on titanium oxide exhibits a thickness of between 2.5 and 4.5 nm.

6. The glazing as claimed in any one of the preceding claims, **characterized in that** the blocking layer based on titanium oxide is deposited from a ceramic TiOₓ target with x between 1.5 and 2, in a nonoxidizing atmosphere.

7. The glazing as claimed in any one of the preceding claims, **characterized in that** the antireflective coating located below the silver-based functional metal layer comprises at least one dielectric layer having a stabilizing function immediately in contact with the blocking layer, in particular based on zinc oxide, doped using at least one other element, such as aluminum.

8. The glazing as claimed in any one of the preceding claims, **characterized in that** the stack comprises:
- an antireflective coating comprising at least two dielectric layers, including a dielectric layer based on titanium oxide and a dielectric layer other than a layer based on titanium oxide separating the dielectric layer based on titanium oxide from a silver-based functional metal layer,
- a blocking layer based on titanium oxide exhibiting a thickness of at least 2 nm, preferably of at least 2.5 nm,
- a silver-based functional metal layer located immediately in contact with the blocking layer based on titanium oxide.

9. The glazing as claimed in any one of the preceding claims, **characterized in that** the stack comprises:
- an antireflective coating located below the silver-based functional metal layer comprising at least one dielectric layer based on titanium oxide and a dielectric layer having a stabilizing function based on zinc oxide separating the dielectric layer based on titanium oxide from the silver-based functional metal layer,
- a blocking layer based on titanium oxide exhibiting a thickness of at least 2 nm, located immediately in contact with the dielectric layer having a stabilizing function based on zinc oxide,
- a silver-based functional metal layer located immediately in contact with the blocking layer based on titanium oxide,
- optionally a blocking overlayer,
- an antireflective coating located above the silver-based functional metal layer,
- optionally an upper protective layer.

10. The glazing as claimed in one of the preceding claims, **characterized in that** the thickness of a functional metal layer is between 5 and 20 nm.

11. The glazing as claimed in any one of the preceding claims, **characterized in that** the antireflective coatings comprise at least one dielectric layer having a barrier function based on silicon compounds chosen from oxides, such as SiO₂, silicon nitrides Si₃N₄ and oxynitrides SiOₓN_{y}, optionally doped using at least one other element, such as aluminum.

12. The glazing as claimed in any one of the preceding claims, **characterized in that** the substrate coated with the stack has been subjected to a heat treatment at a temperature greater than 300°C, preferably 500°C.

13. The glazing as claimed in any one of the preceding claims, **characterized in that** at least the substrate coated with the stack is made of bent and/or tempered glass.

14. The glazing as claimed in any one of the preceding claims, **characterized in that** the stack of thin layers is deposited on the substrate by a vacuum technique of the cathode sputtering type, optionally assisted by a magnetic field.
